Europäisches Patentamt

European Patent Office

Office européen des brevets

(11) Publication number: **0 391 678**
**A2**

# EUROPEAN PATENT APPLICATION

(21) Application number: 90303591.3

(51) Int. Cl.5: **G07C 3/10**

(22) Date of filing: 04.04.90

(30) Priority: 05.04.89 GB 8907697

(43) Date of publication of application:
**10.10.90 Bulletin 90/41**

(84) Designated Contracting States:
**AT BE CH DE DK ES FR GB GR IT LI LU NL SE**

(71) Applicant: **Wang, Kenneth Kuk-Kei**
**House No. 6, Green Villa, Clearwater Bay**
**Road, Lot 251 DD 223**
**Kowloon, Hong Kong(HK)**

(72) Inventor: **Wang, Kenneth Kuk-Kei**
**House No. 6, Green Villa, Clearwater Bay**
**Road, Lot 251 DD 223**
**Kowloon, Hong Kong(HK)**

(74) Representative: **Arthur, Bryan Edward et al**
**Withers & Rogers 4 Dyer's Bu dings Holborn**
**London EC1N 2JT(GB)**

(54) **Data collection and processing.**

(57) A computer system for calculating, and display-
ing in real time, wages earned by piece workers
comprises a plurality of slave data retrieval units,
SDRUs (8) which are associated with respective
work stations at which workers are working e.g. on
sewing machines. A group of SDRUs is connected to
by a master data retrieval unit MDRU (6). Each
MDRU is connected to a concentrator (4) and these
concentrators are connected together in a network.
Each MDRU (6) polls its group of SDRUs sequen-
tially and acquires data from which earnings may be
calculated and stores the data in RAM. The data is
acquired by the concentrators (4) which sequentially
poll the MDRUs (6) and calculate earnings data
which is transmitted back to displays on the individ-
ual SDRUs (8).

# DATA COLLECTION AND PROCESSING

## BACKGROUND OF THE INVENTION

The present invention relates to data collection and processing using a computer system to control an automated manufacturing system, and more particularly relates to a computer system for acquiring, in real time, work output data from a plurality of work stations and generating individual earnings data for each worker.

The invention is applicable particularly but not exclusively to the manufacture of apparel by means of an automated version of the existing 'Progressive Bundle System'.

In accordance with the existing 'Progressive Bundle System', cloth is spread according to the marker length and pre-determined layers. Garment panels are then cut and grouped into component bundles. Each bundle contains a predetermined number of garments pieces of a given size and colour. Each bundle is then given a Bundle Ticket to identify it. The ticket also contains operation sequence number coupons.

The garment bundles are processed according to a predetermined operation sequence, progressively until completion. With the completion of each operation sequence, the operator cuts out an appropriate coupon from a Bundle Ticket and keeps it as a token of the piece rated wage. This is collected by the wages clerk at the end of the working day and the operator's daily wage is calculated on the basis of the coupons submitted by the worker.

A disadvantage of the 'Progressive Bundle System' and other systems which are designed to enable piece-work and/or bonus earnings to be calculated, is that the earnings can conveniently be calculated only at the end of the working day. Consequently the workers are not informed of their earnings until after they have stopped working. Particularly in large factories employing perhaps 1,000 or more workers, the provision of an economical and efficient computer system for calculating earnings in real time presents a significant problem. Further such existing systems only allow production information to be reported a day after the work has been completed.

## SUMMARY OF THE INVENTION

An object of the present invention is to overcome or alleviate the above problems.

Accordingly, the invention provides a data collection and processing system for acquiring, in real time, work output data from a plurality of work stations and generating individual earnings data for each worker, said system comprising at least one concentrator programmed to generate said individual earnings data from said work output data, one or more master data retrieval units associated with each concentrator and one or more groups of slave data retrieval units, associated with a respective one of said master data retrieval units, each slave data retrieval unit being associated with a respective work station and having means to display earnings data pertaining to the work done at that work station, means for acquiring and storing work output data related to its associated work station, and means for sending the acquired data to its associated master data retrieval unit only in response to a command from that master data retrieval unit.

Because the slave data retrieval units (SDRUs) are only required to accept or display data rather than carry out complex processing, the construction of the SDRUs is simplified considerably, and in a preferred embodiment each SDRU comprises a Signetics MC6802 NS microprocessor provided with a simple program stored in EPROM. In this preferred embodiment, each of the MDRUs incorporates a Zilog Z80 microprocessor provided with a separate memory in RAM and a somewhat more sophisticated program stored in EPROM. In this preferred embodiment there are 32 MRDUs, each linked to a respective group of 32 SDRUs, though it will be appreciated that the size of the system could be increased by increasing the size of the groups of MDRUs and/or SDRUs.

Accordingly, the preferred system of the invention combines the advantages of the greater processing power of the concentrators and MDRUS and the reduced cost and complexity of the SDRUs in a three-level hierarchical system.

Preferably the SDRUs are arranged to display the piece-work earnings and/or bonus pay of the workers at the work stations associated therewith.

The above and other objects, features and advantages of the present invention will become more apparent from the following description when taken in conjunction with the accompanying drawings, in which a preferred embodiment of the present invention is shown by way of illustative example.

## BRIEF DESCRIPTION OF THE DRAWINGS

Figure 1 is a schematic representation of a computer system in accordance with the invention.

Figure 2 is a plan view of a Bundle Card for use in the system of Figure 1;

Figure 3 is a plan view of an Employee Card for use in the system of Figure 1;

Figure 4 is a front view of an SDRU;

Figure 5 is a block diagram illustrating the internal structure of an SDRU;

Figure 6 is a block diagram illustrating the internal structure of an MDRU; and

Figure 7 is a block diagram illustrating the internal structure of a concentrator;

## DESCRIPTION OF THE PREFERRED EMBODIMENT

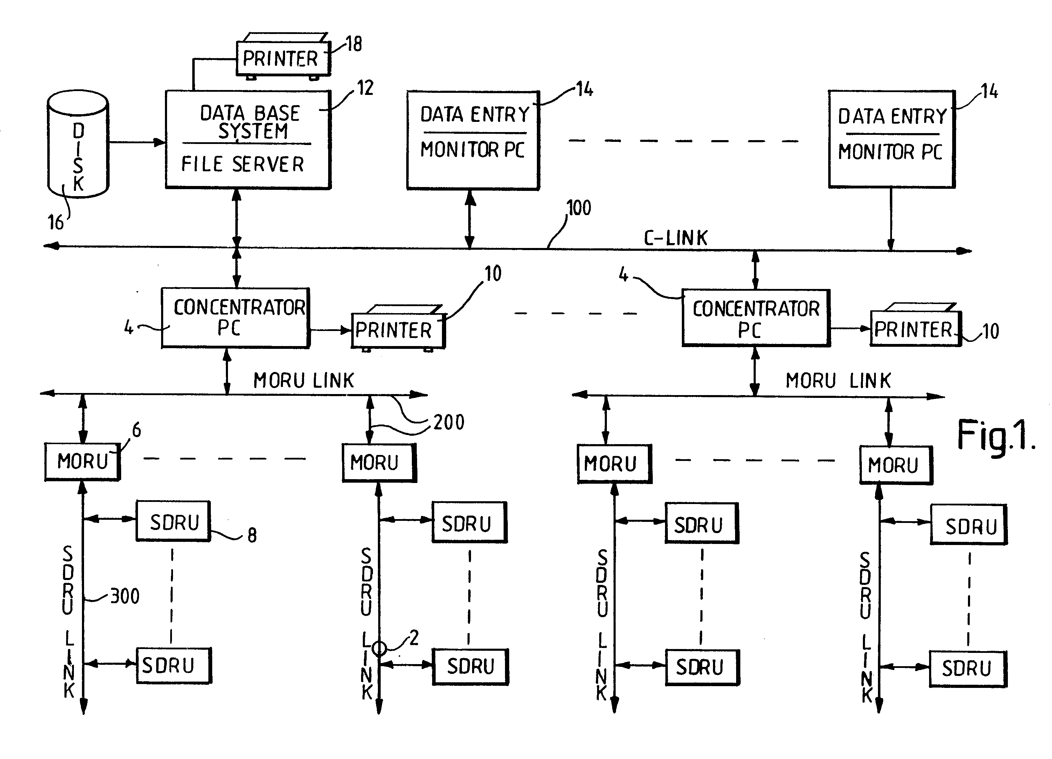

The portion of a complete system shown in Figure 1 comprises two concentrator computers 4, each of which is connected to a group of MDRUs 6.

The MDRU group preferably comprises 32 MDRUs 6 (only 2 of which are shown in each group) which are connected via respective bi-directional hard wired communications links 200 to concentrator 4. Each MDRU is connected via respective hard wired bi-directional communications links 300 to a respective group of 32 SDRUs 8 (of which only two SDRUs of each group are shown for the sake of clarity).

The groups of SDRUs represent the lowest level in the hierarchical system. The MDRUs represent an intermediate level and the concentrators the highest level in this three-level system. Each of the SDRUs is identical except for its address within the system. Similarly each MDRU and each concentrator is structurally identical apart from its address.

Each concentrator 4 is provided with a local printer 10 and is incorporated within a local area network (LAN) which may be of conventional form and comprises a file server 12 and plurality of other data entry computers 14. The file server 12, may for example be an IBM PC-AT (Registered Trade Mark) personal computer provided with a mass storage device such as a hard disk 16 and also a printer 18. The file server 12 is linked to concentrator computers 4 and data entry computers 14 by a hard wired bi-directional communications link 100 so that data can be passed to and from the mass storage device 16 of the file server 12. The concentrator computers 4 are suitably personal computers of a similar type to the file server 12.

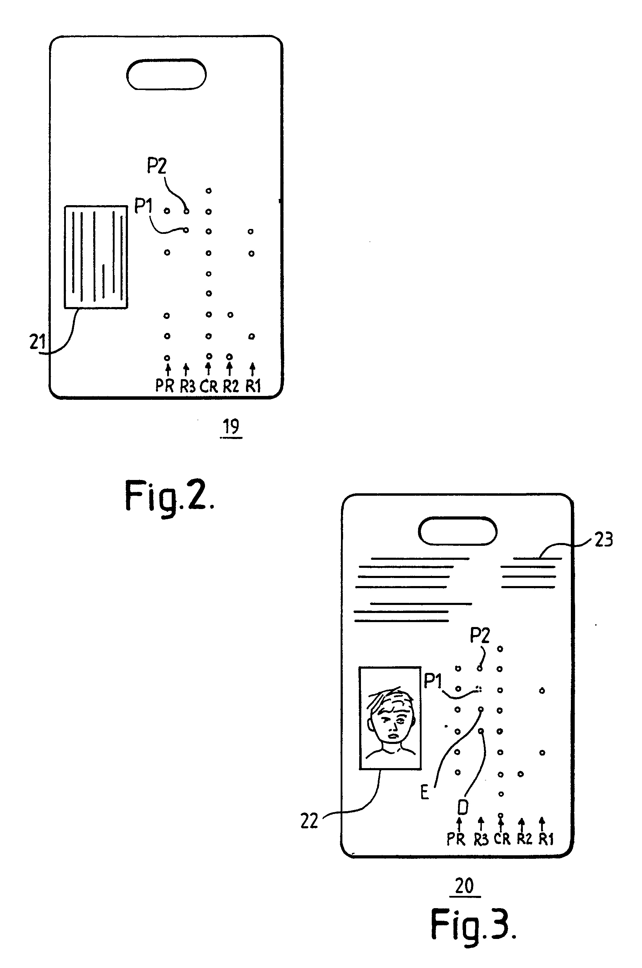

The system of Figure 1 is designed to be used in a modification of the 'progressive bundle system' of manufacturing control, in which the Bundle Ticket of that system, containing operation sequence number coupons, is replaced by a machine-readable Bundle Card 19 (Figure 2) which incorporates a card number in machine-readable form. In an initial procedural set up of the system data is entered into the system via a data entry computer 14 defining the machine types in the factory, the working days and operational codes. Data relating to each job is also entered such as purchase order information and also information for the cutting room which includes the job number, quantity for each bundle, size, color, bundle numbers, lay numbers and markers to be used. All this data is stored in the mass storage device 16 for later use during processing.

As in the 'progressive bundle system', after the lays are cut in the cutting room, they are divided into bundles and each bundle is assigned a bundle number. The Bundle Card is a credit card sized data card fabricated from durable plastics material. There are five rows of a maximum of nine data holes in each card. The holes which are punched out represent data that can be read by an optical card reader in the SDRU. The data includes the card number. These card numbers are kept in a database stored in the mass storage device 16. A supply of Bundle Cards 19 is provided and a Bundle Card is assigned to each bundle. The machine-readable card number of the Bundle Cards is read into the computer system as matched with the bundle number. The bundle number is printed on an adhesive label 21 (Fig. 2) together with data relating to the number and quantity of the pieces of cloth in the bundle and the lay number, which were previously stored in the system. The adhesive label 21 is then attached to the Bundle Card 19. The information on sticky label 21 is printed in normal text so that it can easily be read by the sewing workers.

Additionally, each worker is provided with an Employee Card 20 (Figure 3) of the same type as the Bundle Card so that it too can be read by an SDRU card reader. The Employee Card incorporates an Employee Card number in machine-readable form and includes text giving the name and employee number of the employee as indicated at 23, together with a photograph 22 of the employee. The mass storage device also stores a database which matches the employee numbers with the Employee Card numbers which have been allocated.

The Bundle Card 19 and Employee Card 20 will now be described in detail with reference to Figures 2 and 3. Each card incorporates an array of punched holes comprising a vertical row of clock holes CR and four further vertical rows of holes, namely two rows on either side of the row of clock holes. In the case of both Bundle Cards 19 and Employee Cards 20, vertical rows R1, R2 and R3 represent numerical data, namely either the Bundle Card number or the Employee Card number. The fifth row of holes PR are column even parity holes which are provided to prevent errors in reading the numerical data on rows R1, R2 and R3. Each row has up to nine holes. Rows R1, R2 and R3 contain holes which represent a hexadecimal card number from $0 to $1FFFFF. Each digit of the card number is represented in binary code by punching or not punching out holes in four of the hole positions for each of the rows R1, R2 and R3. Therefore, the first and second digits of the card number are contained in the first row, R1. The third and fourth digits are stored in the second row, R2 and the fifth digit is stored in the four hole positions at the bottom of the fourth row, R3. This leaves four hole positions in row R3 for other purposes. The upper two holes P1, P2 are parity holes. The P1 parity hole is used to store the row parity of digits 1, 2 and 5 of the card number and P1 itself. Parity hole P2 is for row parity of digits 3 and 4 of the card number and the remaining four holes of row R3. Both the column, row PR, and row parity holes are calculated as "even" parity (including the parity hole). For example, if in column 1, two data holes are punched, then the column parity bit should not be punched. The column parity bits are determined after the determination of the P1 and P2 bits. In the case of an Employee Card 20, the hole D indicates that the employee is paid daily. If it is absent, the employee is paid on a piece work basis. All employee Cards are provided with an additional hole E which denotes an Employee Card.

A number of the Employee Cards are allocated to a special purpose and are known as Status Cards. These status cards are identical to the Employee Cards except that they do not bear an employee photograph. Preferably the status cards have card numbers 1 to 100 with the Employee Card card numbers starting at card number 101. This allows 100 different statuses to be provided. Each status represents multiplier used in the computation of the worker's pay. For example different statuses and, therefore different multipliers, may be necessary for normal work, off standard work, normal overtime work, overtime work during a holiday, machine breakdown or other special circumstance. These Status cards are read by the SDRUs 8 in the same way as the Employee Cards. However, the Status Cards will normally be held by a Supervisor within the factory who will insert an appropriate Status Card into a worker's SDRU when the status is not "normal". The new status will remain in force for computing that worker's earnings until a new status is recorded by insertion of a fresh Status Card. The status will revert to normal on logging-off. For convenience, one Employee Card is identified as a master log-off card which can be used to log-off any SDRU which has not been correctly logged-off by the worker. The master log-off card may be an Employee Card with the employee number 0.

The purpose of the computer system is to allow data to be acquired from the SDRUS 8 up through the levels of the hierarchy of the computer system to the network of concentrators 4 and data entry computers 14 so that this data can be processed in accordance with stored programs to provide earnings information for the workers and also reports on the progress of the manufacture of ordered items. The earnings data has to be transmitted back down the levels of the system so that it can be made available to an individual worker at her SDRU.

In order that this data collection can take place, the system makes use of two independent communications links, the SDRU link 300 between the MDRU and its associated group of SDRUs and the MDRU link 200 between the MDRUs and their associated concentrator 4. It will be appreciated that in any system there are a large number of independently operating communications links of these two types.

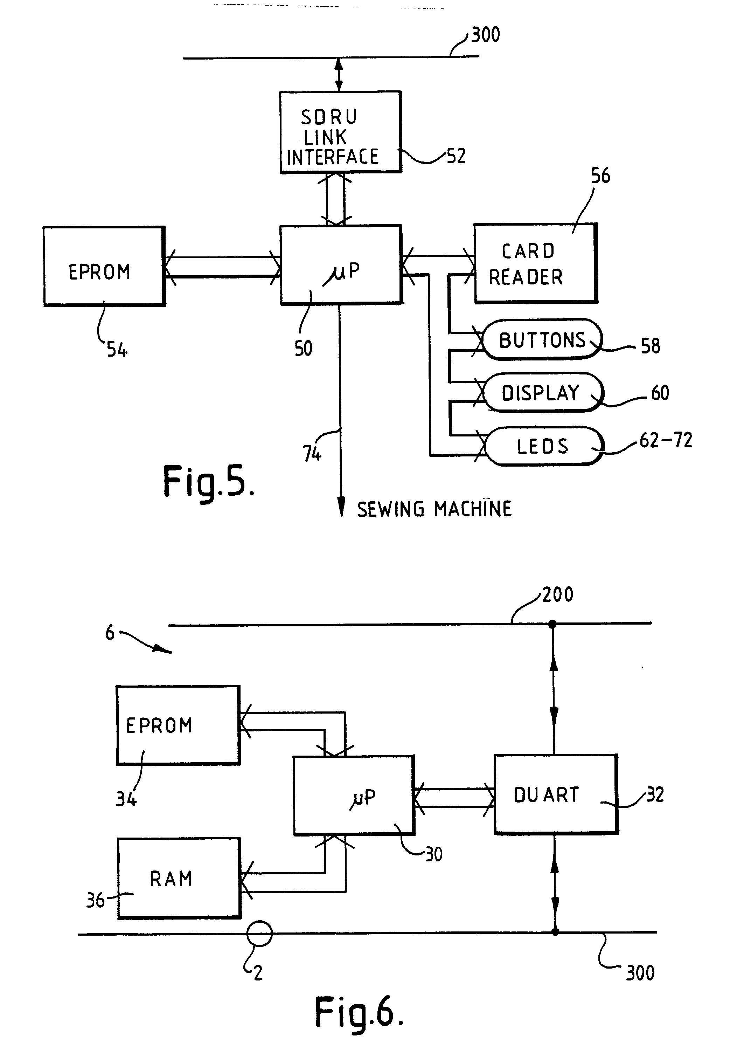

Each MDRU 6 has the structure shown in Figure 6 and is connected to both types of communications links 200, 300. The MDRU is controlled by a microprocessor 30 and includes an EPROM 34 for storing a control program and a memory 36 which stores a data group for each of its associated SDRUs. Each data group in the present embodiment consists of exactly 32 bytes. These bytes are divided into a number of fields which contain information defining the current status of the SDRU. The fields include a card number of the last Bundle Card read by the SDRU, the employee number of the last Employee Card read by the SDRU, various items of information input at the SDRU, such as an operation number of the task being performed by the worker and also the current status determined by the number of the last Status Card read by the SDRU card reader. The precise format of the data group is not given here as it will be appreciated that it may vary in accordance with the application of the system being described. Each MDRU has a unique address and this is set by means of a DIP switch readable by the microprocessor.

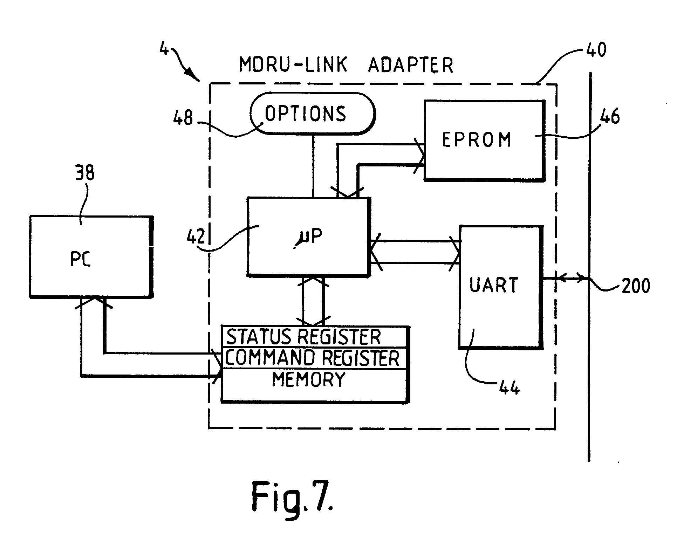

The concentrator 4 has a structure as shown in the block diagram of Figure 7. The concentrator 4 is made up of an independent computer 38 which is connected via a bus to an MDRU-Link adapter 40. The adapter includes its own microprocessor 42 and serves to control the communications functions of the concentrator 4. Conveniently the MDRU-Link adapter 40 can be fabricated on a printed circuit board which is inserted into an expansion slot of the independent computer 38. The adapter interfaces to the MDRU-Link 200 through a universal asynchronous receiver/transmitter chip 44. An EPROM 46 is provided to store the control program for the microprocessor 42. The microprocessor 42 interfaces to the independent computer bus via two registers and a semi-dual port memory. One register, called the status register, provides the independent computer with information regarding the current state of the adapter. The other register, called the command register, provides the adapter with commands sent from the program running on the independent computer. The semi-dual port memory is used both as a buffer for the transfer of information between the independent computer and the MDRUs and as a scratch pad RAM for normal operations of the microprocessor 42. Certain semi-permanent option settings for the MDRU-Link adapter 40 can be set by means of DIP switches 48. Such options include the highest MDRU number to be polled by the adapter since not all concentrators will be connected to the full possible complement of 32 MDRUs.

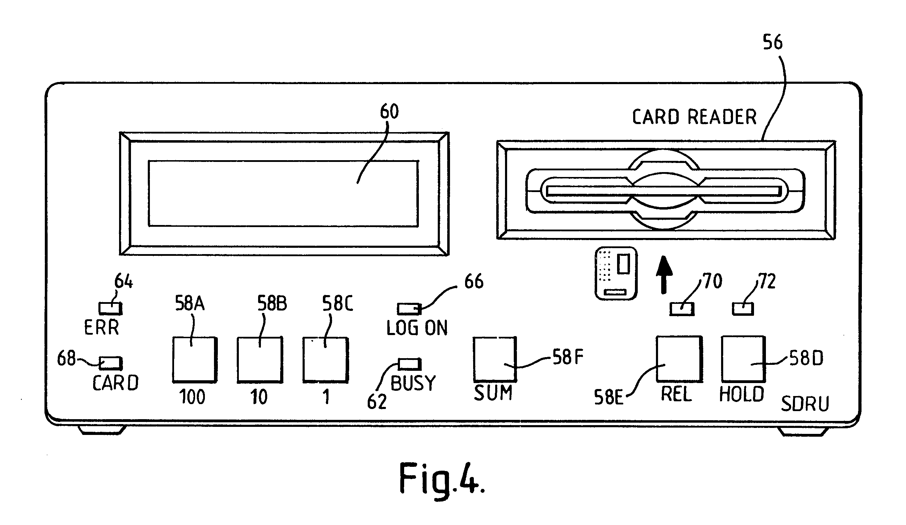

A typical front panel for an SDRU is illustrated in Figure 4. This unit is relatively small so that it can be located at a work station without taking up a great deal of space. Conveniently, it is mounted under a surface on which the sewing machine is supported. The unit includes a card reader 56 into which the Employee Card or Bundle Card can be inserted. There is also an LCD display 60 and an array of push buttons 58 and LEDs.

Each SDRU comprises a MC 6802 NS microprocessor 50 which is coupled to an MC 6850 asynchronous communications interface adaptor (ACIA) 52 which converts between serial data on communications link 300 and parallel data on a data bus to microprocessor 50. The data has an eight bit word link and includes one start bit, one stop bit and a parity bit. The MC 6802 NS microprocessor is sourced from Motorola and has eight data lines and sixteen address lines. It also has 128 bytes of on-chip RAM. There is no external RAM provided in the SDRU. The operation code for microprocessor 50 is stored in an EPROM 54. The clock frequency of microprocessor 50 is 1MHz Microprocessor 50 is interrupted whenever the ACIA 52 receives a byte from the SDRU link 300. The IRQ (interrupt request) input of the microprocessor 50 is connected to a card reader circuit 56, which is level sensitive. Normally, the microprocessor 50 is scanning an array of push buttons 58 but this is interrupted when a data byte is received from communications link 300 or a card is inserted into card reader 56. Thus, both the reception of a data byte and the reading of a newly inserted card are interrupt-driven routines.

Push buttons 58A, 58B, 58C are used to set the operation number for each operation on the apparel which is carried out by the employee.

Push button 58D is a hold button which freezes the current transaction being performed by the SDRU. Push button 58E is a release button which cancels the reading of an inserted card. This may be used when a worker has inserted an incorrect Bundle Card and wishes the SDRU to ignore the transaction. Push button 58F is a 'SUM' button which causes the sum of the wages earned by the worker using that particular SDRU to be displayed on a display 60. Display 60 is an LCD display which displays either:

(i) the card number of a card read by card reader 56, or

(ii) the total wages earned (as already noted) and the total transaction time, or

(iii) the time of day, or

(iv) the total time the current Bundle Card has been inserted, or

(v) the current operation number.

Additionally four LEDs 62, 64, 66, 68, are provided which denote 'BUSY', 'ERROR', 'LOG ON' and 'CARD' states of the SDRU respectively. The 'BUSY' state indicates that the SDRU is processing current activity. The 'ERROR' state indicates that an irrelevant card has been inserted or there has been an error in receiving data or invalid data has been keyed in by the worker. The 'LOG ON' state indicates that the worker has logged onto the system and that his earnings are accordingly being calculated. Finally, the 'CARD' state indicates that a card has been read correctly. LEDs 70 and 72 are associated with the hold and release push buttons to indicate when these have been operated. As previously noted, each SDRU is provided with a connection 74 to the sewing machine used by the employee at that SDRU and this enables the sewing time to be calculated. It will be appreciated that the push buttons 58, display 60 and LEDs 62-72 are all connected to the microprocessor 50. Card reader 56 is arranged to read both Bundle Cards 19 (Figure 2) and Employee Cards 20 (Figure 3). The Employee Card is used to log on to the SDRU so as to identify the worker to the computer system and the Bundle Card 19 is used to identify the bundle on which that worker is working.

Each SDRU has a unique address within its group and this is set by means of a DIP switch readable by the microprocessor 50.

The following description relates to the data transfer between a concentrator and its associated group of 32 MDRUs 6 over the MDRU-Link 200. Each MDRU within the group has a unique address defined by a DIP switch and the MDRUs are addressed sequentially by the concentrator 4. Whenever a data transfer occurs between a concentrator 4 and the currently (logically) connected MDRU 6, the data actually transferred is from 1 to 32 data groups, where each data group is the entire description of an SDRU environment. It will be recalled that each MDRU 6 is associated with a group of up to 32 SDRUs 8. The MDRU contains a storage area (RAM 36) of a size appropriate to contain exactly 32 data groups, one for each of the MDRU's local SDRUs. The MDRUs description is updated directly whenever an SDRU is polled from the MDRU. The concentrator 4 allocates only enough memory (actually a buffer area) to hold 32 data groups, each data group being a description of a respective SDRU environment and each data group comprising 32 bytes. The data groups, when transferred from the currently selected MDRU, are temporarily stored in the buffer area while the concentrator 4 processes the information. These data groups are then transferred back to the MDRU and the buffer area of the concentrator 4 is cleared.

The concentrator 4 does however maintain an employee table, a data retrieval unit table and a transaction table within its local data memory and the information stored therein is continually updated by the information transferred in the 32 MDRU data groups.

The information provided in each data group is described below in more detail.

The concentrator 4 communicates with the MDRUs 6 by means of three basic commands, namely an enquiry command, a read data command and a write data command. Other commands may be used, but these are not described in detail.

## Enquiry Command

The enquiry command tells the MDRU that the concentrator 4 is making an enquiry of the current MDRU status pertaining to the SDRU data groups. The command also includes the current time-of-day (in binary), based on the concentrator's time-of-day clock. This time is later passed to the SDRUs in the SDRU-Link's version of the enquiry command. The command consists of four bytes. The first byte carries a code indicating that this is an enquiry command. The following three bytes give the hours, minutes and seconds of the current time in binary.

The response that the concentrator 4 receives from the enquiry Command issued over the MDRU Link 200 is a packet containing a five byte command/data field. The first four bytes provide 32 separate bits, each bit representing whether Computer processing is required by the SDRU to which the bit relates. This bit is referred to as the CPR bit for that SDRU. Bit 0 of byte #0 refers to SDRU data group zero (i.e. SDRU #0). Bit 1 refers to SDRU #1, and so on, up to SDRU#7.

Then, bit #0 of byte #1 refers to SDRU data group #8, and so on. If the CPR bit is set, that means that particular SDRU data group has need of the concentrator. If all bits are zero, then the MDRU needs no further help from the concentrator 4. These four bytes are referred to as the 'status bytes' for that SDRU group. Note that the concentrator 4 will also receive status bytes of this type in the read data Command discussed below. The last byte in the response contains the MDRU firmware revision number (0 -255)

There is a mechanism built into the MDRU whereby data groups (in particular only those that will be transmitted to the concentrator 4) may enter a LOCKED state. This state means that the MDRU will discontinue polling of the SDRU which belongs to that data group until that data group enters an UNLOCKED state. This mechanism is mentioned here to point out that the enquiry command will not cause any data group to become LOCKED. The LOCKED situation can only occur under the read command. This means that the SDRU status bytes are valid for only the time that they were sent to the concentrator 4. It is possible that more data group CPR bits will be set before the concentrator 4 performs its next command. Therefore, the only functions that the SDRU status bytes may perform in the enquiry command is to indicate to the concentrator 4 that if all the bits are zero, then there are no data groups within that MDRU that require service. The concentrator 4 normally in this case will follow with an enquiry command to the next MDRU though it may perform another command.

## Read Data Command

The 'read data' command indicates to the MDRU what type of read the concentrator 4 is requesting. Each type is determined by bit patterns in the command word sent to the MDRU. The read data command consists of two bytes, the command byte (always the same) and a read data byte.

The read data byte is distinct from any other command. The individual bits all have a special meaning. Bits 0-4 specify an SDRU address. Bits 5, 6 and 7 indicate what data is to be read. The meaning of these bits is defined below (all combinations are legal):
BIT # 7
- If set, then the concentrator 4 wants to read only one data group, specifically relating to the SDRU, the address of which is defined by bits 4, 3, 2, 1, and 0,
- If reset, then all groups may be read. Which groups are read depends on the setting of the bits 5 & 6. In this case the settings of bits 0-4 are ignored.
BIT # 6
- If set, then only those data groups with the CPR ('Computer processing required') bit set will be transmitted. If bit 7 is set and no CPR bits are set then no data groups will be read in response to the command.

- If reset, all data groups will be read, regardless of their CPR bit. If bit 7 is set, then that data group will be read, regardless of its CPR bit.

BIT # 5

- If set, then all 32 bytes of the data group are sent.

- If reset, then only the number of bytes specified elsewhere will be read.

Note that the read data command will cause the MDRU to set the LOCKED bit for any SDRU data group that will be sent to the concentrator 4. Actually, the LOCKED bit is simply the CPR bit. When the CPR bit is set, that particular SDRU is no longer polled by the MDRU. Then, when the CPR bit is reset by the concentrator 4 and the MDRU has processed the response from the concentrator 4 then the MDRU unlocks that particular data group.

The response from the MDRU to the read command is simply a string of bytes, beginning with the four SDRU status bytes. Depending on the type of read command and upon the type of information that must be sent for each data group (i.e. the setting of the number of bytes to send field), the number of bytes transmitted will vary. In any case, the data groups to be sent are selected from the condition of the CPR bit along with the type of read command given. After the SDRU status bytes each data group is sent, starting with the least significant data group (for SDRU # 0, if that one needs to be sent) sequentially, byte after byte (LSB to MSB), until all required data groups have been sent. If the SDRU bytes contain all zeros, then only these bytes will be sent in the response.

## Write Data Command

The write command is a variable length command, in which an initial command byte is followed by the data to be written. The MDRU must pull out the required information from this command as the data is being received. The first byte (byte 0) of the command is a command byte which is always the same. This is followed by four bytes (bytes 1 to 4) which are data group bytes, in which each bit represents one SDRU data group (i.e. bit 0 of byte 1 is SDRU#0, etc.) The concentrator 4 sets all 32 bits in this field when data is to be written to all thirty-two of the data groups within the destination MDRU.

Where data is to be written to only some of the SDRU data groups the bits in the data group bytes representing only these groups are set.

The last section of the command consists of all the data that the concentrator to be written to the destination MDRU. This data is in fact the data groups. The least significant SDRU data group is sent first starting with its least significant bit, followed sequentially by the other data groups, ever increasing in significance, until the last byte is sent of the most significant SDRU data group is sent. This part of the write command is in the same format as the response to the read data command.

The response (if the write was successful) to the write command will contain one byte of all zero bits, implying an acknowledgement. This value can be verified in the concentrator to ensure proper communication.

As shown in Figure 6, each MDRU 6 comprises a Zilog 8 bit microprocessor 30 linked to a Signetics SCN2681 dual asynchronous receiver/transmitter (DUART) chip 32 by a data bus and similarly linked to PROM 34 and RAM 36. The MDRU-link adaptor of the concentrator 4 includes a UART 44 which is a Signetics 2691 chip. The 2681 chip is a dual version of the 2691 chip. The 2681 and 2691 chips used for communication over the data link 200 have a special feature (k own as 'multi-drop mode') which allows synchroni .tion. In this mode, the parity bit normally used to carry parity information in asynchronous communication is used instead as a wake-up bit (also called an Address/Data bit). When this bit is set it tells the receiver's microprocessor to inspect the byte just received by the UART and determine if its address is the address of the receiver. If it is, then the microprocessor instructs the UART to enable its receiver path. If the byte does not contain the correct address information, the UART goes back to sleep until another byte comes in with the wake-up bit set. In this way, the UART is sleeping until a byte comes in where the wake-up bit is set. The microprocessor 42 is left undisturbed by useless interrupts from the UART until the wake-up bit is set.

A 'clear' pattern, is also sent with this wake-up bit set. This 'clear' pattern tells all MDRUs 6 to begin listening for the next sync pattern. If a MDRU receives a sync pattern (i.e. wake-up bit set and contains a MDRU address) and the address is not equal to its address, then the MDRU goes into a 'deep sleep'. This means that it ignores all following bytes (even those with the wake-up bit set) unless the wake-up bit is set and the byte value is the 'clear' pattern, at which time the UART should go into 'normal sleep'. This technique prevents data bytes which do not have the wake-up bit set) from generating faulty synchronization if by chance there was a transmission error and the wake-up bit was set by mistake.

From the above discussion it can be summarized that there are two cases where the wake-up bit is set. One is that the byte being sent is a sync pattern where the data is the address (0 to 31) of the MDRU's that is to form the virtual link with the concentrator 4. The other is the case of the 'clear' pattern, where the data is the 'clear' pattern itself. The clear pattern is defined to be $FF. Notice that the concentrator 4 is the only device on the MDRU-Link that can send a byte where the wake-up bit is set. The only other type of byte sent on the MDRU-Link is a data byte (including data bytes, error detection bytes, and length bytes). In this way, the receivers can never be confused whether the byte received is a 'sync' pattern, a 'clear' pattern, or just a standard data pattern.

Whenever a MDRU 6 receives a 'sync' pattern, and the address matches its address, then the MDRU must send a byte to the concentrator 4 that contains its address. This will tell the concentrator that the virtual link has been established. Then the concentrator may begin sending its commands. If the concentrator does not receive the response, then the MDRU is assumed not present and the concentrator 4 proceeds to poll the next MDRU.

The communication protocol implemented on the communication link 200 between concentrator 4 and the MDRU 6 is based on an interrupt driven scheme whereby the MDRU microprocessor 30 is interrupted upon receipt of a byte of information from the concentrator 4. The MDRU 6 only responds to communication requests initiated by the concentrator 4 and can never on its own accord initiate a communication with the concentrator. However, once a communication sequence has been initiated, the MDRU may receive and/or transmit information to the concentrator 4 over the communications link 200 using the command formats already described. Thus an MDRU 6 provides a centralised, low cost intelligence that links the operators at the SDRUs 8 with the concentrator 4. By using the MDRUs 6, an improvement in communication efficiency results, since the concentrator 4 only needs to poll at most 32 MDRUs, rather than all 1024 SDRUs 8.

Although each MDRU 6 can only exchange data with the concentrator 4 under the control of that concentrator, it is programmed to continuously and sequentially poll the SDRUs 8. This is carried out using communications link 300 which comprises a twisted pair of conductors, namely a data line and a clock line. The clock frequency (750 kHz) on the clock line is driven by the MDRU.

The MDRU has four types of commands that it can send to the SDRUs.

The commands are an enquiry command, a read command used for reading to the MDRU data obtained by the SDRU from its various input devices, i.e. the card reader 56, and push buttons 58, a write command for providing data for display on the LCD display screen 60, and an acknowledge or send next command.

## Enquiry Command

In general, the MDRU uses an enquiry command to determine if a specific SDRU has need of the MDRU's services. Every enquiry command includes the time of day which is utilized by those SDRUs that are currently in the mode of time display. If the SDRU's answer to the enquiry poll is negative, the MDRU moves on to the next sequential SDRU, as determined by the SDRU's address (a hardware switch on the SDRU). If the SDRU's response is positive, that response contains information telling the MDRU what type of help the SDRU needs. Then the MDRU will take one of several possible courses of action to deal with that SDRU before going on to polling the next SDRU.

To provide synchronization on the SDRU-Link 300, along with destination address information, every enquiry command includes two header bytes. The first byte is always $FF, while the second byte is %111"""", where """" is the address of the SDRU (from 0 to 31 in binary). This synchronization technique provides a way for unselected SDRUs to ignore all transmissions except for the sync transmission, thereby improving their overall internal register polling performance. The intricate details and theory of this synchronization are discussed later.

For data integrity, there is a hardware built in parity check for each byte transmitted on the SDRU-Link, whether the source is the MDRU or SDRU.

The enquiry command has two separate parts and consists of exactly five bytes total. The first part is the sync byte and the sync/address byte. The second part is three time bytes.

The time bytes indicate the hours, minutes and seconds of the current time of day. When a SDRU receives this command, it first determines that there is indeed a sync byte. Once this is verified, it checks to see if the address is its own address by checking the setting of the DIP switch in which the address is stored. If so, it will prepare a response. If not, it will update its display with the new clock information if in time mode, then ignore all further transmissions on the SDRU-Link, until receipt of the next sync byte.

If the SDRU finds that the address field contains its address, then it will build up a response packet for transmission to the MDRU. If it is in time mode (described below), it will also update its displays with the new clock information, but only after completing the transmission.

The response is two bytes long. It contains information about whether or not anything new has occurred since the last enquiry command. On the SDRU there are several input functions which are described below in detail. Each of these functions is indicated as a bit in the response field.

The lower five bits of the first byte in the response format are the address of the responding SDRU. This is given to the MDRU so that some integrity checking can be performed. If all response bits are zero, then the MDRU will assume that the SDRU has nothing new to report and therefore the MDRU may interrogate the next SDRU. The MDRU may follow the enquiry command with a write command because it has something for the SDRU.

The second byte of the response contains the firmware revision of the SDRU.

## Read Command

The read command is typically given by the MDRU after an enquiry command if the responding SDRU set one or more bits. The read command is a functional level command. This means that it can specify which SDRU functional input it desires to read. It is the SDRU's responsibility to translate this into the individual registers that need to be read. In the case of the card reader 56, the data to be sent to the MDRU is more than one byte. Nevertheless, the SDRU can only transfer one byte at a time. After each byte is sent it must wait for the MDRU to transmit a 'Send Next' command before the SDRU transmits the next byte.

The read command specifies which function it desires to read by setting certain bits in the command byte. The read command byte has exactly the same format as the enquiry response byte. The MDRU can simply send to the SDRU what it received in order to do a read of the SDRU functional inputs.

The SDRU will then respond, byte by byte, to the read command. Each response format is slightly different.

The above response formats can be classified as:

(a) Card reader response
(b) Operation number response
(c) Push button switches response
(d) Write command response.

## Card Reader Response

There are two different card reader responses, irrespective of the type of card. One is when a new card is inserted into the SDRU. In this case the card reader response consists of exactly three bytes. The most significant four bit nibble of byte 0 has the format OOED where the E bit is set if the card is an Employee Card and the D bit, if E is set, determines pay status, and otherwise is MS bit of bundle number. The remaining five nibbles carry the five digits of the card number.

The other card reader response is for when the card is extracted (taken out). In this case, only one byte is transferred and that byte has a fixed format: 11000000

## Operation-number Response

The Operation-number response consists of two bytes. These most significant nibble of byte 0 is all zeros and the remaining nibbles carry the three digits of the operation number.

The setting of an operation number is done by pressing any of the three operation-number push buttons 58A, 58B, 58C an appropriate number of times to set the value of the 100s, 10s and units respectively if the operation number to be set. If the operation number ever changes then the MDRU is notified in the enquiry response by the SDRU setting the appropriate bit in its response to that command. The operation number is a three digit decimal value.

## Pushbutton Switches Response

The Pushbutton response consists of one byte in which a bit is set to indicate the status of the hold 58D, release 58E and sum 58F buttons and the sewing machine line 74.

When the sewing pedal is pressed, the appropriate bit is set to indicate the sewing machine is running. Then the MDRU is notified in the enquiry response by the SDRU setting the corresponding bit. This bit is kept set until the sewing pedal is released. At that time the corresponding bit in the enquiry response is set to notify the MDRU again.

## Write Command

The write command must always be preceded by an enquiry command, though it is possible that a read command may be given after the enquiry command is given. Any number of read and write commands, in any order, may be sent to the same SDRU after the initial enquiry command. However, for the MDRU to communicate with another SDRU, another enquiry command must be given.

The write command is used to control the LCD display 60 and also the LEDs on the SDRU. Each write command includes a 'time of day' byte followed, if necessary by one or more bytes containing the data for display. The LCD display can either be in time of day mode or numeric mode. The latter mode is used to display to the worker numerical information such as earnings for the job just completed or accumulated earnings for the day. The time of day byte includes bits which are set to indicate the mode. The actual time data is contained as previously described in all enquiry commands. When the display is in numeric mode the next three bytes contain in six nibbles the data for the six digits that can be displayed. The final byte contains bits which control the decimal point.

When the write command is to be used to control the LEDs 62-72 the first 'time of day' byte contains a modified bit pattern in the most significant bit to distinguish it from the command for writing to the LCD. Six of the bits of the single following byte each correspond to one of the six LEDs 62-72 in order to control its operation.

## Acknowledge ('Send Next') Command

This command is used by the MDRU to tell the SDRU to send the next byte of a multi-byte response that it is currently in the process of sending in response to a read command. The MDRU needs to be aware of how many of these commands to send (that is, how many bytes are defined for the desired SDRU response as given above). The format of the single byte of the 'Send Next' command is very similar to the read command and includes the address of the SDRU in bits 0 to 4.

The response to the Send-Next command is simply the next byte that the SDRU wants to send to the MDRU.

This concludes this section on the commands and responses of the SDRU-Link. Note that there is no no-acknowledge response (that is, the SDRU received bad parity, for example). In this case, the SDRU will not respond at all. The MDRU will eventually time-out and has the option of trying the command again, perhaps starting from the enquiry command. If the MDRU receives an error from a SDRU transmission, it can retry the command immediately.

If the MDRU does time-out from a transmission of the enquiry command, it could imply that the addressed SDRU does not exist or no longer exists, or is faulty.

The data collected from the SDRUs and input by means of the data entry computers can be processed in a number of different ways in order to produce earnings data as well as management information on the progress of jobs within the factory. The earnings data processing may be either on the conventional piece-rate basis or on the system known as Standard Allow Minute (SAM). In implementing this sytem each operation as identified by a specific operation code that can be entered by the worker at the SDRU is allocated a SAM value per dozen which represents the time which this operation should take to be performed on a dozen items within a bundle. This SAM value will be stored in the database maintained by the file server. A standard rate of dollars per Standard Allowed Minute is also stored in the system. The quantity in dozens of items within a bundle is acquired from reading the information stored on the database relative to the Bundle Card inserted by the worker. Therefore, using the information acquired from the SDRU and the information already stored in the database, the actual earnings of a worker for performing a particular operation on a bundle of items can be calculated by the system.

The status when read from a Status Card inserted into a SDRU can be processed by the system to multiply the calculated piece-rate or SAM earnings by an appropriate rate for the particular status. The system can also produce bonus payments which may be applicable in certain circumstances.

## Claims

1. A data collection and processing system for acquiring, in real time, work output data from a plurality of work stations and generating individual earnings data for each worker, said system comprising at least one concentrator programmed to generate said individual earnings data, one or more master data retrieval units associated with each concentrator and one or more groups of slave data retrieval units, associated with a respective one of said master data retrieval units, each slave data retrieval unit being associated with a respective work station and having means to display earnings data pertaining to the work done at that work station, means for acquiring and storing work output data related to its associated work station, and means for sending the acquired data to its associated master data means retrieval unit only in response to a command from that master data retrieval unit.

2. A system as claimed in claim 1, wherein said master data retrieval units each comprise a programmed microprocessor and are arranged to poll their associated slave data retrieval units under microprocessor control, thereby to read the acquired work output data.

3. A system as claimed in claim 1 or 2, wherein said master data retrieval units are arranged to store the work output data read from their associated slave data retrieval units and to write the stored output data to the associated concentrator in response to a command from the concentrator.

4. A system as claimed in claim 3, wherein each master data retrieval unit successively polls its slave data retrieval units and stores the acquired work output data of its slave data retrieval units in memory and said concentrator successively polls said master data retrieval units and reads said work output data from the memory of each master data retrieval unit.

5. A system as claimed in any one of the preceding claims, wherein each slave data retrieval unit comprises means for reading worker identification data fed in by a worker.

6. A system as claimed in any one of the preceding claims, wherein each slave data retrieval unit comprises means for reading job identification data relating to a job carried out at its associated work station.

7. A system as claimed in any one of the preceding claims, wherein each slave data retrieval unit comprises a connection with a machine used by a worker to perform a job at its associated work station in order to acquire data on the operation of said machine.

8. A system as claimed in claim 7, wherein said connection comprises means to prevent operation of said machine unless appropriate data has previously been entered into the slave data retrieval unit by the worker.

9. A computer system as claimed in any one of the preceding claims, wherein each slave data retrieval unit comprises a microprocessor programmed to respond to commands received from the associated master data retrieval unit to receive data for display and send data relating to inputs to the slave data retrieval unit.

10. A system as claimed in any one of the preceding claims, wherein each slave data retrieval unit comprises means for reading a data-bearing token fed therein by a worker.

11. A system as claimed in any one of the preceding claims, wherein said slave data retrieval units are arranged to display piece work or SAM earnings and/or bonus pay.

12. A system as claimed in any one of the preceding claims, wherein said slave data retrieval units are arranged to display time of day.

13. A computer system as claimed in any one of the preceding claims, further comprising a file server and/or one or more data entry computers connected with the or each concentrator in a network.

Fig.1.

Fig.2.

Fig.3.

Fig.4.

EP 0 391 678 A2

Fig.5.

SEWING MACHINE

Fig.6.

MDRU-LINK ADAPTER

OPTIONS

EPROM

PC

µP

UART

STATUS REGISTER
COMMAND REGISTER
MEMORY

Fig.7.